# FASCICULE DE BREVET EUROPEEN

(11) **EP 2 751 485 B1**
(45) Date de publication et mention de la délivrance du brevet: **02.10.2019**
(21) Numéro de dépôt: 12748675.1
(22) Date de dépôt: 13.08.2012
(51) Int. Cl.: F23C 9/08, F23C 99/00

(54) **DISPOSITIF DE STABILISATION DE LA COMBUSTION DILUÉE DANS UNE ENCEINTE DE COMBUSTION A PAROIS FROIDES**
VORRICHTUNG ZUR STABILISIERUNG EINER MAGERSVERBRENNUNG IN EINER BRENNKAMMER MIT GEKÜHLTEN BRENNKAMMERN
DEVICE FOR STABILIZING THE DILUTE COMBUSTION IN A COOLED-WALLS COMBUSTION CHAMBER

(30) Priorité: 01.09.2011 FR 1157737
(43) Date de publication de la demande: 09.07.2014
(73) Titulaire: ENGIE, 92400 Courbevoie (FR)
(72) Inventeur: QUINQUENEAU, Alain, F-78600 Maisons Lafitte (FR); VILLERMAUX, Clotilde, F-92400 Courbevoie (FR); OURLIAC, Mathieu, F-77162 Saint Soupplets (FR); AYOUB, Mechline, 34980 SAINT CLEMENT DE RIVIERE (FR); HONORE, David, F-76100 Rouen (FR)
(74) Mandataire: Cornuejols, Georges
(86) Numéro de dépôt international: PCT/EP2012/065816
(87) Numéro de publication internationale: WO 2013/029977

(56) Documents cités:
- EP-A1- 1 048 901
- EP-A1- 2 085 698
- EP-A2- 0 698 764
- WO-A1-03/091626
- US-A- 5 154 599
- US-A1- 2009 136 406

## Description

La présente invention concerne un dispositif de stabilisation de la combustion diluée dans une enceinte de combustion : elle s'applique, en particulier, aux technologies de combustion à haut rendement énergétique et environnemental pour des enceintes de combustion appelées « parois froides », dans lesquels la température de peau des parois contenant la charge est de l'ordre ou inférieure à 1000 K telles les fours de raffinage ou les chaudières industrielles.

La plupart des procédés de combustion sont confrontés à des émissions non désirées d'oxydes d'azote (NOx) dans les fumées de combustion. Les oxydes d'azote ont des effets néfastes sur l'être humain ainsi que sur l'environnement. Ils sont, par exemple, responsables des pluies acides et sont un contributeur fort à la formation d'ozone atmosphérique.

Les réglementations européennes vont dans le sens d'une réduction importante des émissions d'oxydes d'azote. De ce fait, les constructeurs d'équipements de combustion, en particulier de brûleurs, se préoccupent de manière constante de limiter au maximum les émissions d'oxydes d'azote. En 2011, selon la Directive européenne GIC (n° 2001- 80-CE), les valeurs limites d'émission (« VLE ») d'oxydes d'azote pour les grandes installations de combustion sont fixées à 200 mg/Nm³ à 3% d'O₂ pour des chaudières industrielles existantes et à 100 mg/Nm³ à 3% d'O₂ pour des chaudières neuves. Il est de plus probable que ces VLE soient revues à la baisse dans les années à venir.

La formation d'oxyde d'azote s'effectue via de nombreux chemins chimiques. Pour la combustion du gaz naturel dans les chaudières, les deux principaux contributeurs sont les oxydes d'azote d'origine thermique (mécanisme de Zeldovich) et les oxydes d'azote précoces (mécanisme de Fenimore). Le taux de production d'oxydes d'azote thermiques est très dépendant de la température. Leur formation s'accroit fortement lorsque la température dans la zone de réaction dépasse 1500 K. Outre la dépendance à la température, la formation des oxydes d'azote thermiques dépend aussi du temps de résidence dans les zones chaudes.

Étant données les contributions relatives des deux types de formation des oxydes d'azote, on se concentre, en général, dans un premier temps sur la réduction des oxydes d'azote thermiques, puis on observe l'effet des modifications sur les oxydes d'azote précoces.

La réduction des oxydes d'azote peut être faite selon deux principes appelés « méthodes primaires » et « méthodes secondaires ». Les méthodes primaires consistent à empêcher la formation des oxydes d'azote tandis que les méthodes secondaires visent à détruire les oxydes d'azote formés. Les méthodes secondaires ont l'inconvénient d'un prix de mise en oeuvre élevé du procédé de réduction, de rejets d'ammoniac importants et d'une fragilité accrue de l'installation.

Ainsi, les méthodes primaires semblent préférables. La plupart des brûleurs de chaudières à basses émissions d'oxydes d'azote sont basés sur un étagement de l'air et/ou du combustible (par exemple tel qu'exposé dans le brevet US 6 485 289). Dans cette architecture, deux zones de réactions sont créées, une zone primaire riche, apportant l'énergie nécessaire à la stabilisation d'une zone secondaire pauvre, diluée par les recirculations internes des produits de combustion. Une technologie pour améliorer encore les performances des brûleurs à basse émission d'oxydes d'azote consiste à utiliser une recirculation externe des produits de combustion. L'air de combustion est alors pré dilué avec des fumées (environ 30 % du débit de fumées en cheminée). Cela permet de diminuer la concentration en oxygène dans l'écoulement comburant et ainsi de réduire le pic de température et les oxydes d'azote thermiques. On peut citer le brevet US 6 869 277. Cependant, ces systèmes sont complexes, onéreux et demandent une maintenance fréquente. Pour ces raisons, ils sont assez peu mis en oeuvre en oeuvre.

La combustion sans flamme, aussi appelée « combustion diluée » est un type de combustion permettant de limiter les pics de température et, ainsi, de diminuer drastiquement les émissions d'oxydes d'azote. Cette combustion est basée sur une intense dilution des jets de comburant et de combustible via des recirculations internes de produits de combustion elles mêmes provoquées par les jets de comburant et de combustible, injectés de façon séparée et à forte impulsion. La dilution permet de passer d'une combustion intense localisée, à une combustion plus douce en volume. La température élevée des produits servant de diluant, permet d'assurer la stabilité de ce mode de combustion. Ce type de combustion se caractérise par un volume important de la zone de dégagement de chaleur, une température homogène dans le front de flamme, des pics de température et des fluctuations de températures bien plus faibles que pour une combustion classique, des émissions d'oxydes d'azote réduites et un couplage moins fort entre ondes acoustiques et dégagement de chaleur.

Le brevet US 5 154 599 décrit un exemple de brûleur à combustion sans flamme. Ce document présente une architecture de brûleur régénératif, ce qui signifie que les fumées sont aspirées par le brûleur, leur énergie est stockée dans une capacité thermique puis cédée à l'air de combustion afin de le réchauffer jusqu'à 1200 K. La dilution des réactifs avant combustion est assurée par une distance importante entre les injections d'air et de combustible (au moins deux fois le diamètre de l'injecteur central) et un débit important de fumées qui re-circulent (taux de recirculation supérieur à deux pour du gaz naturel).

Cette technologie est industriellement implantée dans des procédés dit « chauds », à savoir des procédés dont la température moyenne de l'enceinte est très supérieure à la température d'auto-inflammation du combustible considéré. L'oxydation sans flamme s'auto-entretient par auto-inflammation d'un mélange ternaire comburant/combustible/gaz brûlés. Pour que l'auto-inflammation ait lieu, il est nécessaire que la température dans la zone de mélange soit supérieure à la température d'auto-inflammation. Pour atteindre cette condition, deux moyens sont possibles. Dans le premier, on préchauffe au moins l'un des réactifs (typiquement le comburant) par récupération de l'énergie des fumées ou via une source externe d'énergie. Dans le deuxième, on utilise les recirculations internes des produits chauds de combustion pour dépasser la température d'auto-inflammation dans la zone de mélange des réactifs. Ces deux méthodes de stabilisation sont largement répandues dans les applications hautes température (température d'enceinte supérieur à la température d'auto-inflammation). En effet, dans ce cas, les fumées sont suffisamment énergétiques pour permettre de préchauffer fortement le combustible et/ou le comburant et ainsi dépasser la température d'auto-inflammation dans la zone de mélange.

La stabilité de la combustion diluée, et donc sa viabilité, est remise en cause dans des procédés dits « à parois froides ». En effet, les produits de combustion se refroidissant au contact des parois, ils ne permettent pas de dépasser la température d'auto-inflammation dans la zone de mélange combustible/comburant/produits de combustion qui re-circulent. L'oxydation sans flamme, telle qu'elle est mise en oeuvre dans des applications hautes températures, ne peut donc pas être étendue à des enceintes dites aux parois froides.

Néanmoins, plusieurs technologies ont été développées, mais non encore déployées à l'échelle industrielle, sur des applications de type chaudières, pour lever ce verrou. On peut citer les stabilisations :
- par flamme pilote,
- par élément catalytique pour diminuer la température d'auto-inflammation ou
- par préchauffage important de l'air de combustion.

Chacune de ces technologies présente des inconvénients, en termes de coût, de rendement, de complexité et/ou de fiabilité.

La problématique de la stabilisation de flamme en environnement industriel n'est pas propre à la combustion diluée. Pour les enceintes de types chaudières, la stabilisation de flamme des brûleurs « bas oxydes d'azote » est souvent basée sur une zone de combustion primaire riche intense qui aide à stabiliser la zone de combustion pauvre dont les propriétés sont proches (en termes de dilution de l'air par les produits de combustion) de celle d'une combustion sans flamme. On peut citer le brevet US 5 407 347 comme technologie de brûleur bas oxydes d'azote moderne. En application combustion diluée, on peut citer le brevet EP 1 850 067 qui vise à stabiliser une combustion fortement diluée à l'aide d'un brûleur pilote. Cependant, ce type de stabilisation a l'inconvénient de créer des zones chaudes potentiellement très émettrices d'oxydes d'azote.

Pour les applications de combustion interne, la combustion « HCCi » (acronyme de Homogeneous Charge Compression Ignition) dans les moteurs à essence, dont les propriétés sont celles, en termes de mélange, d'une combustion diluée, s'effectue par bougie d'allumage. Le fonctionnement d'un brûleur industriel se faisant en continue, la technologie d'allumage commandé ne peut donc s'appliquer ici.

La présente invention vise à remédier à tout ou partie de ces inconvénients.

À cet effet, la présente invention vise, selon un premier aspect, une enceinte de combustion dite à parois froides, munie d'un brûleur comprenant au moins une arrivée de comburant et au moins une arrivée de combustible, les arrivées de comburant et de combustible débouchant séparément dans l'enceinte à une distance adaptée à la mise en place d'une combustion fortement diluée par des recirculations internes des produits de combustion vers la zone du brûleur. L'enceinte comportant un dispositif de stabilisation de la combustion diluée qui comporte un élément chauffant adapté à réchauffer, en régime stationnaire de fonctionnement, les produits de combustion pour maintenir des conditions d'auto-inflammation, ledit élément chauffant étant positionné dans la zone de dilution et entourant l'ensemble des jets de comburant et de combustible.

Grâce à ces dispositions, on permet la stabilisation d'une combustion diluée. Le présent dispositif combine de nombreuses propriétés intéressantes pour les applications industrielles, telles que des émissions d'oxydes d'azote et de monoxyde de carbone très faibles, une forte homogénéité du transfert à la charge et une diminution de l'intensité des pics de température, une zone de réaction bien répartie en volume, un dégagement de chaleur plus homogène et une flamme moins sensible aux instabilités thermo acoustiques. L'insertion dans le foyer de l'élément chauffant permet, par réchauffement des produits de combustion qui re-circulent, de maintenir localement dans la zone de mélange, les conditions d'auto-inflammation nécessaires à la stabilisation de la combustion fortement diluée.

Selon des caractéristiques particulières, l'élément chauffant comporte une résistance électrique.

Selon des caractéristiques particulières, l'élément chauffant comporte un tube chauffant alimenté en produits chauffés via une combustion auxiliaire, produits de combustion ou fluide intermédiaire.

Selon des caractéristiques particulières, l'élément chauffant comporte un tube multi perforé alimentés en produits de combustion.

Selon des caractéristiques particulières, l'élément chauffant est situé au niveau de la base du brûleur.

Cet élément chauffant réchauffe les produits de combustion, avant que ceux-ci n'atteignent la zone brûleur où ils se mélangent avec le comburant d'une part, et le combustible d'autre part. Le comburant et le combustible sont injectés séparément. Dans la zone de mélange combustible/comburant, la température, grâce au réchauffage des fumées par l'élément chauffant, dépasse alors la température d'auto-inflammation du mélange. L'élément chauffant, ayant réchauffé les produits de combustion avant mélange avec les réactifs, induit au point de rencontre des jets de comburant et de combustible, une zone chaude (température supérieure à la température d'auto-inflammation).

Selon des caractéristiques particulières, l'élément chauffant est adapté à maintenir la température des produits de combustion en recirculation réchauffés inférieure à la température limite d'augmentation exponentielle du taux de production des oxydes d'azote thermiques.

Selon des caractéristiques particulières, le dispositif comporte un moyen de préchauffage d'air par récupération du flux radiatif émis par l'élément chauffant.

Selon des caractéristiques particulières, le moyen de préchauffage d'air est un échangeur thermique situé à l'intérieur de la chambre de combustion en regard de l'élément chauffant et adapté à récupérer une part de la puissance fournie par l'élément chauffant transférée sous forme de flux radiatif vers les parois froides de la chambre de combustion et à transférer, au comburant et/ou au combustible, au moins une partie de cette puissance récupérée.

Selon des caractéristiques particulières, le moyen de préchauffage d'air est un échangeur thermique situé à l'intérieur de la chambre de combustion en regard de l'élément chauffant et adapté à récupérer une part de la puissance fournie par l'élément chauffant transférée sous forme de flux radiatif vers les parois froides de la chambre de combustion et à transférer, à une charge fluide à réchauffer, au moins une partie de cette puissance récupérée.

La stabilité de la combustion sans flamme est ainsi encore renforcée par le préchauffage du comburant ou du combustible, et le rendement est amélioré. Au final, la puissance ainsi dégagée par l'élément chauffant est récupérée, pour une part, par le comburant via l'échangeur, pour une autre part, par les fumées en recirculation via un échange conducto-convectif. De plus, l'échangeur thermique permet de diminuer la contrainte thermique sur les parois froides situées en regard de l'élément chauffant. On conserve alors une bonne homogénéité du transfert thermique sur l'ensemble des parois de chauffe de l'enceinte de combustion.

Selon des caractéristiques particulières, le moyen de préchauffage d'air est un mur radiatif situé à l'intérieur de la chambre de combustion entre l'élément chauffant et les parois froides.

Ce mur, ou écran, radiatif confine la chaleur à l'intérieur du corps de chauffe. On limite ainsi le transfert thermique radiatif de l'élément chauffant vers les parois en regard. La longueur de ce mur doit être égale à la hauteur de l'élément chauffant. Les deux points clés sont le matériau constituant ce mur ainsi que le diamètre de ce mur.

Selon des caractéristiques particulières, les arrivées de comburant et de combustible possèdent des trous d'injection de diamètres adaptés à ce que la vitesse du comburant et du combustible soient favorables à la mise en oeuvre d'une combustion fortement diluée.

Selon un troisième aspect, la présente invention vise une chaudière, qui comporte un dispositif de stabilisation de la combustion objet de la présente invention.

D'autres avantages, buts et caractéristiques de la présente invention ressortiront de la description qui va suivre, faite dans un but explicatif et nullement limitatif en regard des dessins annexés, dans lesquels :
- la figure 1 est un schéma fonctionnel d'un premier mode de réalisation du dispositif objet de la présente invention pour la mise en oeuvre de la combustion sans flamme dans une enceinte de combustion à parois froides, sans préchauffage du comburant ou du combustible,
- la figure 2 est un schéma fonctionnel d'un deuxième mode de réalisation du dispositif objet de la présente invention pour la mise en oeuvre de la combustion sans flamme dans une enceinte à parois froides couplée avec un système de récupération du flux radiatif émis par l'élément chauffant à des fins de préchauffage du comburant,
- la figure 3 est un schéma d'une vue longitudinale d'une chambre de combustion équipée du élément chauffant pour la stabilisation de la combustion sans flamme et
- la figure 4 représente une variante du dispositif illustré en figure 3 comportant un moyen de préchauffage d'air par récupération du flux radiatif émis par l'élément chauffant.

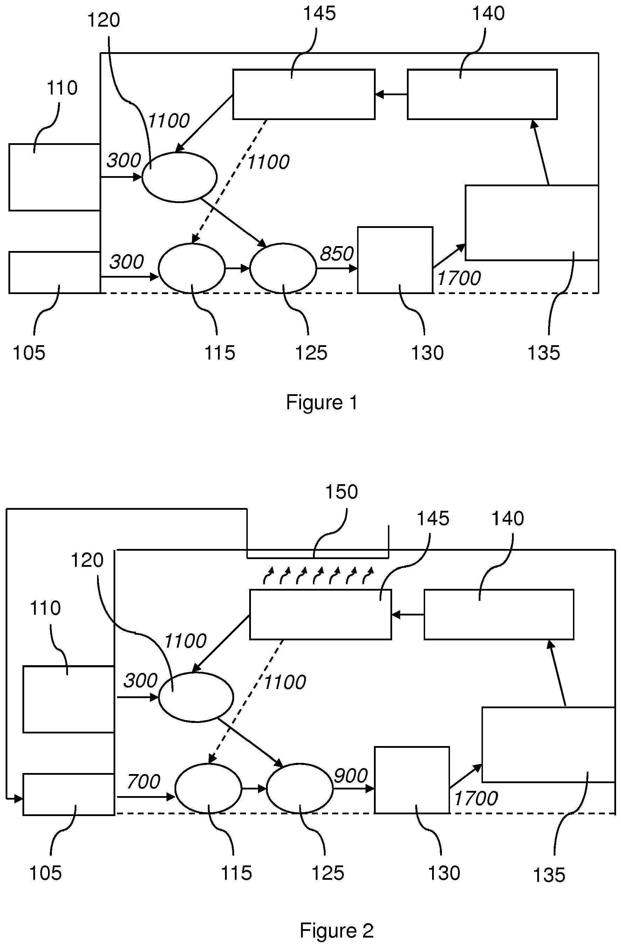

On observe, en figures 1 et 2, un équipement de type enceinte de combustion 245 dite à parois froides, et par exemple une chaudière industrielle à gaz équipée d'un brûleur et d'une cheminée. Généralement, le brûleur admet un plan de symétrie. La chambre admet un axe de symétrie dans le cas d'une chaudière à tubes de fumées.

Seule la moitié supérieure de l'équipement est représentée en figures 1 et 2. Le brûleur proposé ici est d'architecture simple. Au centre est située l'arrivée d'air 105 et, à la périphérie, sont positionnées deux injections de combustible 110. Dans des variantes, il y a plus de deux injections de combustible. Dans des variantes, l'injection de combustible est positionnée au centre et des injections de comburant sont placées en périphérie. Deux paramètres importants caractérisent le brûleur : la distance entre les trous d'injection et les impulsions des jets de combustible et de comburant. La distance entre les jets de combustible et de comburant doit permettre à ceux-ci de se mélanger avec des produits de combustion qui re-circulent, refroidis au contact des parois, avant la rencontre des jets de combustible et comburant. Des recirculations intenses de produits de combustion sont alimentées par les impulsions fortes en sortie de l'injecteur de comburant. Par exemple, pour la combustion sans flamme au gaz naturel, le taux de recirculation, défini comme le rapport du débit recirculant sur la somme des débits injectés, est supérieur ou égal à quatre.

On observe, en figure 1, que l'air entre à une température de 300 K (les températures des fluides sont indiquées, en figures 1 et 2, en chiffres en italique, en regard des flèches représentant leurs mouvements). L'air se mélange avec les produits de combustion à au moins 1100 K en 115 avant de se mélanger avec le combustible, en 125. Le combustible entre à une température de 300 K et se mélange, lui-aussi, avec les produits de combustion en 120. Le mélange obtenu en 125 possède une température de 850 K. Une combustion a lieu en 130 et les produits de combustion en sortent à 1700 K. L'échange thermique entre les produits de combustion et la charge a lieu en 135. Une partie des produits de combustion effectue une recirculation en 140 pour retourner se mélanger avec du combustible et de l'air entrant.

Dans les enceintes de combustion à parois froides considérées, la température des fumées au niveau de la base du brûleur est inférieure à 700 K. Dans ce cas, la température moyenne du mélange, combustible/comburant dilués par les fumées, est inférieure à la température d'auto-inflammation de tous les combustibles usuels. La combustion diluée, entretenue par auto inflammation du mélange, ne peut donc pas s'établir correctement.

Dans les modes de réalisation du dispositif objet de l'invention représentés dans les figures, on positionne un élément chauffant 145 qui réchauffe la part des fumées qui re-circulent pour participer à la dilution des réactifs. Ce réchauffage par l'élément chauffant 145 vise à atteindre, dans la zone de mélange combustible/comburant, d'une part, une température supérieure à la température d'auto-inflammation du combustible considéré et, d'autre part, une concentration de l'ordre de 5% en oxygène dans le jet d'oxydant. Une combustion diluée stable, entretenue par auto-inflammation du mélange de réactifs, s'établit alors en 130.

La température maximale dans la zone réactive ainsi obtenue est de l'ordre de 1700 K. Vis-à-vis d'une combustion classique, cette température modérée induit une réduction forte des émissions d'oxydes d'azote. La combustion s'effectue dans un volume important et non plus dans une flamme concentrée. La charge à chauffer peut être de l'eau (chaudière à tubes de fumées ou à tubes d'eau) ou un produit liquide autre (four de distillation atmosphérique d'une raffinerie par exemple). L'ensemble des fumées qui re-circulent transfèrent une part importante de leur énergie à la charge. Les fumées qui re-circulent jusqu'au niveau de la zone de mélange sont alors réchauffées de 850 K à au moins 1100 K par l'élément chauffant.

La température de peau de l'élément chauffant doit permettre de chauffer suffisamment les produits de combustion qui re-circulent tout en ne dépassant pas la température limite de production des oxydes d'azote thermiques. Les inventeurs ont déterminé qu'une valeur de 1200 K représente un bon compromis pour respecter ces deux contraintes antagonistes.

On obtient aussi des températures faibles des parois contenant la charge (eau ou fluide). De plus, la température de l'élément chauffant est préférentiellement d'au moins 1100 K. Ainsi, le flux radiatif net incident au niveau des parois contenant la charge à chauffer, reçu par l'élément chauffant, proportionnel à la différence des températures élément chauffant/parois élevées à la puissance quatre, est élevé. Ce flux radiatif supplémentaire peut alors dégrader l'homogénéité du transfert à la charge.

Une solution, décrite ici en regard de la figure 2 consiste à installer un échangeur 150 dans la chambre. Dans cet échangeur circule le comburant. Le préchauffage ainsi obtenu permet d'améliorer encore la stabilité de la combustion sans flamme, tout en ré-homogénéisant le transfert à la charge, à rendement égal. Il a été estimé qu'un préchauffage de l'air de l'ordre de 700 K peut être obtenu avec un tel échangeur. La combustion étant fortement diluée, le préchauffage de l'air de combustion n'a qu'un effet mineur sur les niveaux d'émissions d'oxydes d'azote.

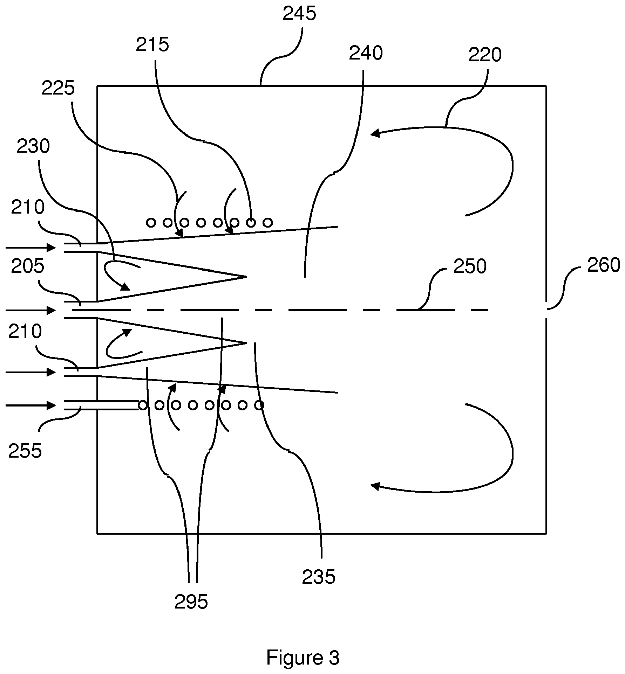

La figure 3 est un schéma d'une vue longitudinale d'une chambre de combustion équipée du élément chauffant pour la stabilisation de la combustion sans flamme fortement diluée, issue d'un brûleur à jet séparées de combustible liquide ou gazeux, dans une enceinte de combustion à parois froides.

La chambre de combustion 245, alimentée en combustible 1 et air 2, est un volume confiné présentant un axe de symétrie 250 dans le cas d'une chaudière à tubes de fumées par exemple. Le brûleur est de type brûleur à injections séparées à forte distance entre les jets. L'injection d'air 205 est située au centre et le combustible est acheminé en périphérique par deux orifices 210. Comme on l'observe sur la figure 3, la distance entre l'injecteur central d'air 205 et les deux injecteurs de gaz 210 est comprise entre 1,5 fois et 3 fois le diamètre de l'injecteur de comburant 205 pour une combustion au gaz naturel.

Ainsi, avant que le combustible et le comburant ne soient en contact en 235, ceux-ci sont dilués par des produits de combustion recirculés 230 pour le comburant et 225 pour la combustible. Ces produits de combustion recirculés sont préalablement réchauffés par l'élément chauffant 215, ici en forme de spirale entourant les jets 295 de combustible et de comburant.

L'élément chauffant 215 peut être de différentes natures. Il peut consister, soit en une résistance électrique, soit en un élément chauffant creux alimenté par des produits chauds d'une combustion auxiliaire ou éventuellement en une combinaison des deux suivant les ressources disponibles sur site.

Le dimensionnement et le positionnement de l'élément chauffant 215 permettent de maximiser la surface d'échange tout en n'induisant aucun effet de confinement de la zone de mélange vis-à-vis des recirculations internes. Comme représenté sur la figure 3, le flux des produits passe entre les spires avec une perte de charge modérée. La distance inter-spires est suffisante pour limiter la perte de charge et permettre la dilution. A l'opposé, cette distance est suffisamment faible et le diamètre des spires suffisamment important pour maximiser la surface d'échange thermique. L'élément chauffant 215 est positionné le plus proche possible de la base de brûleur, paroi où débouchent les combustible et comburant. La longueur, selon l'axe 250, de l'élément chauffant 215 permet à l'élément chauffant de dépasser la position du point de fusion des jets de combustible et de comburant. À ce niveau, le diamètre de l'élément chauffant 215 est tel que l'élément chauffant 215 n'est pas impacté par les jets latéraux. Une distance de sécurité de quelques centimètres est préférable afin de limiter les contraintes thermiques sur l'élément chauffant 215 et ainsi augmenter sa durée de vie. Quelle que soit l'alimentation énergétique (produits d'une combustion annexe ou énergie électrique), le matériau de l'élément chauffant 215 permet de maximiser le transfert thermique convectif et minimiser le flux radiatif émis. Une rugosité importante de l'ordre du millimètre est préférentielle afin d'augmenter le coefficient d'échange convectif. Au contraire une émissivité faible, de l'ordre de 0,1, est préférable afin de diminuer la perte par transfert radiatif.

Ce sont les impulsions des jets (principalement du jet de comburant) qui sont à l'origine de mouvements advectifs intenses 220. Il a été démontré qu'un taux de recirculation d'au moins 4 est nécessaire, en combustion du gaz naturel avec de l'air, pour assurer une dilution suffisante en 235. Au niveau du dimensionnement des diamètres des trous d'injections du brûleur, cela correspond à une vitesse du comburant à la sortie de l'injecteur préférentiellement au moins égale à 30 m/s.

Lors de leur recirculation, les produits de combustion perdent une grande part de leur énergie par convection et rayonnement au profit de la charge à chauffer. Cette charge peut être contenue dans des tubes (chaudière à tubes d'eau ou four de raffinage) ou dans un volume dans lequel est plongée la chambre de combustion 245 (chaudière à tubes de fumées).

L'élément chauffant 215 sert alors à compenser partiellement cette perte thermique en chauffant les produits de combustion qui re-circulent et interviennent dans la dilution des réactifs. Ces produits de combustion étant réchauffés, la température en 235 dépasse la température d'auto-inflammation du combustible, et la combustion diluée est alors stable. La combustion diluée se développe en volume 240 et produit peu d'oxydes d'azote. Finalement les fumées sont évacuées de l'enceinte de combustion par la cheminée 260. L'alimentation de l'élément chauffant 215 est représentée en 255.

Pour assurer un transfert thermique suffisant, outre la surface d'échange, deux paramètres sont à considérer : le différentiel de température entre la peau de l'élément chauffant 215 et les fumées qui se trouvent à son contact, et le coefficient d'échange convectif à la paroi de l'élément chauffant 215. La température des fumées est de l'ordre de 850 K pour une chaudière industrielle à tubes de fumées. Il a alors été estimé qu'une température d'au moins 1200 K sur la surface de l'élément chauffant 215 est préférable pour réchauffer suffisamment les fumées et assurer une température en 235 supérieure à la température d'auto-inflammation de combustibles usuels. Le deuxième paramètre influant sur la valeur de l'échange thermique convectif entre l'élément chauffant 215 et les fumées est le coefficient d'échange convectif h. Ce coefficient dépend principalement de la vitesse du fluide, de sa viscosité, de l'intensité de la turbulente et de la rugosité des parois. Parmi ces paramètres, on peut jouer principalement sur la rugosité des parois. Pour maximiser l'énergie transmise au fluide par l'élément chauffant 215, on maximise le coefficient d'échange et le différentiel de température.

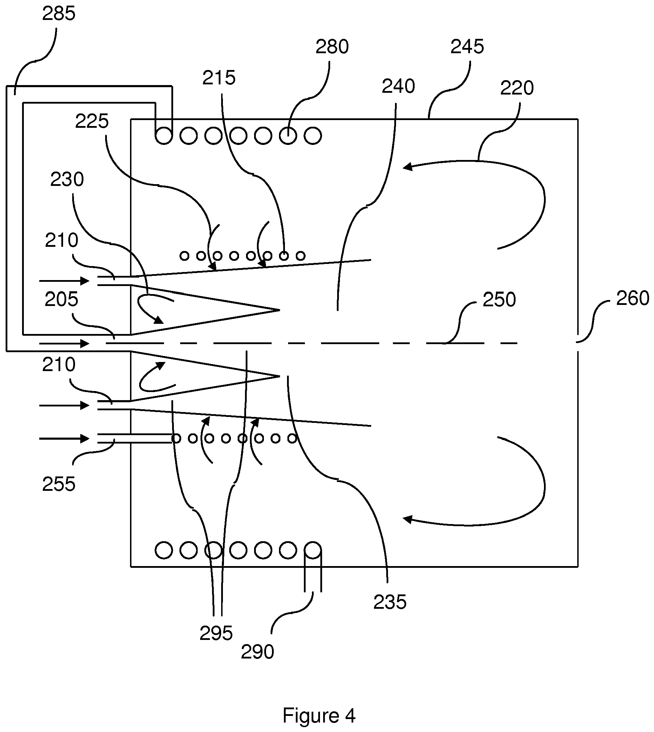

Néanmoins, avec une température importante à la paroi de l'élément chauffant 215, une part non négligeable de l'énergie dissipée par l'élément chauffant 215 sera récupérée par les parois de la chambre 245 qui se trouvent en regard de l'élément chauffant 215, sous forme de flux thermique radiatif incident. Sur la figure 4, le flux radiatif émis par l'élément chauffant 215 dépend principalement du coefficient d'émissivité du matériau dont est constitué l'élément chauffant 215 et du différentiel des températures de parois de l'élément chauffant et des parois contenant la charge à chauffer, élevées à la puissance quatrième. Il est ainsi préférable d'utiliser pour l'élément chauffant 215 un matériau de coefficient d'émission faible.

Cependant, avec les matériaux actuels, le différentiel de température étant important, il est difficile de réduire, le flux radiatif incident sur les parois contenant la charge à une quantité négligeable. Ainsi, une perte de l'homogénéité du transfert thermique, obtenue grâce à la combustion sans flamme peut apparaitre.

Une variante du dispositif illustré en figure 3 peut comporter un moyen de préchauffage d'air 280 par récupération du flux radiatif émis par l'élément chauffant 215. Ce moyen de préchauffage 280 peut ainsi être associé à l'élément chauffant 215 de façon à récupérer du flux radiatif émis par l'élément chauffant 215. Ainsi on prévoit soit un écran radiatif (non illustré) qui confine la chaleur à l'intérieur du corps de chauffe, soit, comme en figure 4, un échangeur de chaleur 280 qui récupère le flux incident radiatif issu de l'élément chauffant 215 pour préchauffer l'air de combustion avant son entrée dans la chambre 245. L'échangeur de chaleur 280 est installé en regard de l'élément chauffant 215, préférentiellement tout autour des parois de la chaudière. Le combustible rentre, en 290, froid dans l'échangeur, et ressort en 285, avant d'être injecté dans la chambre de combustion par l'arrivée 205. Typiquement la température de chauffage peut atteindre 700 K pour la combustion à l'air. Cet échangeur de chaleur 280 permet d'améliorer encore la stabilité de la combustion, tout en conservant un transfert homogène à la charge et des émissions faibles d'oxydes d'azote, le tout à rendement identique. Une de ces variantes est illustrée en figure 4.

La stabilité de la combustion sans flamme est alors encore renforcée par ce préchauffage du comburant, et le rendement est amélioré. Au final, la puissance ainsi dégagée par l'élément chauffant est récupérée, pour une part, par le comburant via l'échangeur, pour une autre part, par les fumées recirculées via un échange conducto convectif.

Dans des variantes, on fait circuler un fluide process à réchauffer plutôt que l'air de combustion, et ainsi récupérer l'énergie disponible pour une autre utilisation que le préchauffage du comburant ou du combustible.

Dans le cas où l'échangeur 280 est remplacé par un mur radiatif situé entre l'élément chauffant et les parois, la longueur de ce mur est préférentiellement égale ou supérieure à la longueur de l'élément chauffant.

Des simulations ont mis en évidence un dimensionnement permettant de stabiliser une combustion sans flamme dans une chaudière pilote de 20 kW. La température des parois de l'enceinte de combustion est de l'ordre de 350 K. Les jets de combustible et de comburant ne sont pas préchauffés dans un premier temps. Le brûleur est de type brûleur à jets séparés avec un injecteur air au centre et deux injecteurs latéraux de méthane. La distance entre les jets est de deux fois le diamètre du jet d'air. Les paramètres sont donnés dans le tableau ci-dessous.

La même méthode de modélisation que pour une étude de combustion sans flamme antérieure en enceinte chaude a été utilisée. Les simulations en enceinte froide ont permis de montrer que la géométrie choisie : élément chauffant en spirale avec les dimensions données ci dessous, permet de conserver le même mode de fonctionnement que le brûleur seul (mélange et champs aérodynamiques identiques).

Ainsi les conditions de dilution de la combustion sans flamme sont respectées avec la présence de l'élément chauffant 215. De plus, avec une température de peau de l'élément chauffant 215 de l'ordre de 1200 K, une rugosité de 1 mm et une émissivité faible de 0,1, le réchauffage des fumées qui re-circulent dans la zone du brûleur induit par l'élément chauffant 215 permet de retrouver les conditions thermiques de stabilisation de la combustion dans le zone de mélange Air/méthane.

| | | |
|---|---|---|
| Brûleur | Puissance brûleur | 20 kW |
| | Taux d'aération | 1,1 |
| Enceinte de combustion | Volume | 0,12 m ³ |
| | Température des parois internes | 350 K |
| Elément chauffant | Diamètre EC | 8,6 cm |
| | Hauteur EC | 16 cm |
| | Distance EC/base brûleur | 2,5 cm |
| | Température EC | 1200 K |
| | Diamètre des spires | 4mm |
| | Distance interspires | 6mm |
| | Emissivité | 0,1 |
| | Rugosité | 1mm |

La présente invention s'étend aux applications de la combustion dans une enceinte de combustion paroi froide munie d'un brûleur comprenant une arrivée de comburant et une arrivée de combustible (gaz naturel, gaz de procédé, gaz de cokerie, gaz de synthèse, etc). Les arrivées de comburant et de combustible débouchent séparément dans un four à une distance relative permettant la mise en place d'une combustion fortement diluée (distance entre les jets comprise entre 1,5 et 3 fois le diamètre de l'injecteur comburant et vitesse d'injection comprises entre 20 et 100 m/s pour une combustion gaz naturel/Air) par les recirculations internes des produits de combustion vers la zone brûleur.

On obtient la stabilisation de la combustion sans flamme dans une enceinte de combustion dite 'parois froides' (température de moins de 1000 K) en utilisant un élément solide chauffant (résistance électrique ou tube chauffant alimenté en produits chauffés via une combustion ou un système auxiliaire) situé au niveau de la base brûleur et entourant les jets de comburant/combustible. Cet élément, de forme spirale, réchauffe les produits de combustion, avant que ceux-ci n'atteignent la zone brûleur où ils se mélangent avec le comburant d'une part, et le combustible d'autre part. Le comburant et le combustible sont injectés séparément. Dans la zone de mélange combustible/comburant, la température, grâce au réchauffage des fumées par l'élément chauffant, dépasse alors la température d'auto-inflammation du mélange.

Les impulsions des jets sont élevées afin de générer d'intenses recirculations des produits de combustion vers le brûleur. Typiquement pour une combustion air/gaz naturel, la vitesse de l'air en entrée de chambre est de plus de 30 m/s. Avec ce type d'architecture du brûleur, la combustion est auto-entretenue sous condition d'une température dans la zone de mélange combustible dilué/air dilué supérieure à la température d'auto-inflammation du mélange.

L'élément chauffant, ayant réchauffé les produits de combustion avant le mélange avec les réactifs, induit au point de rencontre des jets de comburant et de combustible, une zone chaude (température supérieure à la température d'auto-inflammation) avec une dilution telle que la concentration en oxygène est de l'ordre de 5 à 8% au lieu de 20% pour de l'air non dilué. La combustion ainsi fortement diluée est alors créée et auto-entretenue par auto-inflammation suivant le principe de la combustion sans flamme.

Afin d'assurer une dilution suffisante, le taux de recirculation (défini comme le rapport du débit recirculé sur la somme des débits injectés) est supérieur à quatre pour la combustion du gaz naturel par exemple. Cette condition est assurée par des vitesses élevées des réactifs en sortie des injecteurs.

Outre des contraintes d'ordre purement technique (facilité d'installation, de maintenance, coût) les deux contraintes portant sur l'élément chauffant sont : d'une part de ne pas confiner l'écoulement dans la zone de mélange et ainsi permettre une dilution suffisante des réactifs par les produits recirculés, tout en étant suffisamment proche de la zone de mélange. Et d'autre part de maximiser l'échange thermique convectif entre l'élément chauffant et les fumées recirculés participant à la dilution, tout en évitant les point chauds (température inférieure à la température limite de l'augmentation exponentielle du taux de production des oxydes d'azote thermiques).

On observe que plusieurs formes de l'élément chauffant sont utilisables : spirale, grilles, tube brûleur à multiple perforations, brûleur radiant etc. Pour chaque cas, le dimensionnement se fait de façon à permettre une traversée de l'élément chauffant avec un maximum de surface d'échange avec une perte de charge minimale. Dans le cas de l'élément chauffant en spirale, les dimensions importantes sont le diamètre de l'élément chauffant, sa longueur, son espacement vis-à-vis de la base brûleur, le diamètre des spires et la distance inter-spires. L'élément chauffant permet donc de s'affranchir du conflit entre température élevée et dilution importante dans la zone de mélange produits recirculés/comburant/combustible. L'appareillage ne modifiant pas les propriétés aérodynamiques du brûleur, les principales propriétés de la combustion fortement diluée sont obtenues : les émissions d'oxydes d'azote sont réduites, la zone de réaction est répartie en volume, le dégagement de chaleur est plus homogène, la flamme est moins sensible aux instabilités thermo acoustiques et les pics de température sont moins intenses.

## Revendications

1. Enceinte de combustion (245) dite à parois froides, munie d'un brûleur comprenant au moins une arrivée de comburant (105, 205) et au moins une arrivée de combustible (110, 210), les arrivées de comburant et de combustible débouchant séparément dans l'enceinte à une distance adaptée à la mise en place d'une combustion (130, 240) fortement diluée par des recirculations internes (140, 220) des produits de combustion vers la zone du brûleur, et d'un dispositif de stabilisation de la combustion diluée
**caractérisé en ce qu'**il comporte un élément chauffant (145, 215) adapté à réchauffer, en régime stationnaire de fonctionnement, les produits de combustion pour maintenir des conditions d'auto-inflammation, ledit élément chauffant étant positionné dans la zone de dilution (120) du combustible avec des produits de combustion en recirculation, d'une part, et du comburant avec des produits de combustion, d'autre part, et entourant l'ensemble des jets (295) de comburant et de combustible avant leur zone de contact (235).

2. Enceinte de combustion selon la revendication 1, dans laquelle l'élément chauffant (145, 215) s'étend au moins au delà de la zone de contact (235) des jets de combustible et de comburant, le long d'un axe d'injection (250) d'au moins un de ces jets.

3. Enceinte de combustion selon l'une des revendications 1 ou 2, dans laquelle l'élément chauffant (145, 215) entoure la zone d'inflammation (240).

4. Enceinte de combustion selon l'une des revendications 1 à 3, dans laquelle l'élément chauffant (145, 215) comporte une résistance électrique.

5. Enceinte de combustion selon l'une des revendications 1 à 4, dans laquelle l'élément chauffant (145, 215) comporte un tube chauffant alimenté en produits chauffés via une combustion auxiliaire, produits de combustion ou fluide intermédiaire.

6. Enceinte de combustion selon l'une des revendications 1 à 5, dans laquelle l'élément chauffant (145, 215) comporte un tube multi perforé alimentés en produits de combustion.

7. Enceinte de combustion selon l'une des revendications 1 à 6, dans laquelle l'élément chauffant (145, 215) est situé au niveau de la base du brûleur.

8. Enceinte de combustion selon l'une des revendications 1 à 7, dans laquelle l'élément chauffant (145, 215) est adapté à maintenir la température des produits de combustion en recirculation réchauffés inférieure à la température limite d'augmentation exponentielle du taux de production des oxydes d'azote thermiques.

9. Enceinte de combustion selon l'une des revendications 1 à 8, qui comporte un moyen de préchauffage d'air (280) par récupération du flux radiatif émis par l'élément chauffant (215).

10. Enceinte de combustion selon la revendication 9, dans laquelle le moyen de préchauffage d'air (280) est un échangeur thermique (150, 280) situé à l'intérieur de la chambre de combustion en regard de l'élément chauffant (145, 215) et adapté à récupérer une part de la puissance fournie par l'élément chauffant transférée sous forme de flux radiatif vers les parois froides de la chambre de combustion (245) et à transférer, au comburant et/ou au combustible, au moins une partie de cette puissance récupérée.

11. Enceinte de combustion selon l'une des revendications 9 ou 10, dans laquelle le moyen de préchauffage d'air (280) est un échangeur thermique (150, 280) situé à l'intérieur de la chambre de combustion en regard de l'élément chauffant (145, 215) et adapté à récupérer une part de la puissance fournie par l'élément chauffant transférée sous forme de flux radiatif vers les parois froides de la chambre de combustion (245) et à transférer, à une charge fluide à réchauffer, au moins une partie de cette puissance récupérée.

12. Enceinte de combustion selon l'une des revendications 9 à 11, dans laquelle moyen de préchauffage d'air est un mur radiatif situé à l'intérieur de la chambre de combustion (245) entre l'élément chauffant (145, 215) et les parois froides.

13. Enceinte de combustion selon l'une des revendications 1 à 12, dans laquelle les arrivées de comburant et de combustible possèdent des trous d'injection de diamètres adaptés à ce que la vitesse du comburant et du combustible soient favorables à la mise en oeuvre d'une combustion fortement diluée.

14. Chaudière, qui comporte une enceinte de combustion selon l'une des revendications 1 à 13.

## Patentansprüche

1. So genannte Verbrennungseinfassung (245) mit kalten Wänden, die mit einem Brenner versehen ist, umfassend wenigstens eine Sauerstoffträger-Zufuhr (105, 205) und wenigstens eine Brennstoffzufuhr (110, 210), wobei die Sauerstoffträger- und Brennstoffzufuhr getrennt in die Einfassung in einer Entfernung einmünden, die die für das Einsetzen einer Verbrennung (130, 240) geeignet ist, die durch interne Rückführungen (140, 220) der Verbrennungsprodukte in den Bereich des Brenners und einer Stabilisierungsvorrichtung der verdünnten Verbrennung stark verdünnt ist **dadurch gekennzeichnet, dass** er ein Heizelement (145, 215) umfasst, das zum Heizen der Verbrennungsprodukte im stationären Betrieb geeignet ist, um die Selbstzündungsbedingungen zu halten, wobei das genannte Heizelement im Verdünnungsbereich (120) des Brennstoffs einerseits mit Verbrennungsprodukten in der Rückführung und andererseits des Sauerstoffträgers mit Verbrennungsprodukten positioniert ist und alle Strahlen (295) des Sauerstoffträgers und des Brennstoffs vor ihrem Kontaktbereich (235) umgibt.

2. Verbrennungseinfassung gemäß Anspruch 1, bei der das Heizelement (145, 215) sich wenigstens über den Kontaktbereich (235) der Strahlen des Sauerstoffträgers und des Brennstoffs entlang einer Einschießachse (250) wenigstens eines dieser Strahlen hinweg erstreckt.

3. Verbrennungseinfassung gemäß einem der Ansprüche 1 oder 2, bei der das Heizelement (145, 215) den Zündbereich (240) umgibt.

4. Verbrennungseinfassung gemäß einem der Ansprüche 1 bis 3, bei der das Heizelement (145, 215) einen elektrischen Widerstand umfasst.

5. Verbrennungseinfassung gemäß einem der Ansprüche 1 bis 4, bei der das Heizelement (145, 215) eine Heizröhre umfasst, die über eine Hilfsverbrennung, Verbrennungsprodukte oder ein Zwischenfluid mit erhitzten Produkten versorgt ist.

6. Verbrennungseinfassung gemäß einem der Ansprüche 1 bis 5, bei der das Heizelement (145, 215) eine mehrfach perforierte Röhre umfasst, die mit Verbrennungsprodukten versorgt ist.

7. Verbrennungseinfassung gemäß einem der Ansprüche 1 bis 6, bei der das Heizelement (145, 215) an der Basis des Brenners angeordnet ist.

8. Verbrennungseinfassung gemäß einem der Ansprüche 1 bis 7, bei der das Heizelement (145, 215) geeignet ist, um die Temperatur der in der Rückführung erhitzten Verbrennungsprodukte unter der Grenztemperatur der exponentiellen Erhöhung der Produktionsrate der thermischen Stickoxide zu halten.

9. Verbrennungseinfassung gemäß einem der Ansprüche 1 bis 8, die ein Mittel zur Luftvorerhitzung (280) per Auffangen des vom Heizelement (215) ausgegebenen Strahlenflusses umfasst.

10. Verbrennungseinfassung gemäß Anspruch 9, bei der das Mittel zur Luftvorerhitzung (280) ein Wärmetauscher (150, 280) ist, der im Innern der Verbrennungskammer gegenüber dem Heizelement (145, 215) angeordnet und geeignet ist, einen Teil der vom Heizelement gelieferten Leistung aufzufangen, die in Form eines Strahlenflusses zu den kalten Wänden der Verbrennungskammer (245) übertragen ist und wenigstens einen Teil dieser aufgefangenen Leistung auf den Sauerstoffträger und / oder den Brennstoff zu übertragen.

11. Verbrennungseinfassung gemäß einem der Ansprüche 9 oder 10, bei der das Mittel zur Luftvorerhitzung (280) ein Wärmetauscher (150, 280) ist, der im Innern der Verbrennungskammer gegenüber dem Heizelement (145, 215) angeordnet und geeignet ist, einen Teil der vom Heizelement gelieferten Leistung aufzufangen, die in Form eines Strahlenflusses zu den kalten Wänden der Verbrennungskammer (245) übertragen ist und wenigstens einen Teil dieser aufgefangenen Leistung auf eine zu erhitzende Fluidcharge zu übertragen.

12. Verbrennungseinfassung gemäß einem der Ansprüche 9 bis 11 bei der das Mittel zur Luftvorerhitzung eine Strahlenmauer ist, die im Innern der Verbrennungskammer (245) zwischen dem Heizelement (145, 215) und den kalten Wänden angeordnet ist.

13. Verbrennungseinfassung gemäß einem der Ansprüche 1 bis 12, bei der die Sauerstoffträger- und Brennstoffzufuhr Einschießlöcher mit Durchmessern besitzen, die geeignet sind, dass die Geschwindigkeit des Sauerstoffträgers und des Brennstoffs für die Umsetzung einer stark verdünnten Verbrennung günstig sind.

14. Heizkessel, der eine Verbrennungseinfassung gemäß einem der Ansprüche 1 bis 13 umfasst.

## Claims

1. "Cold-walls"-type combustion chamber (245) fitted with a burner comprising at least one oxidant inlet (105, 205) and at least one fuel inlet (110, 210), the oxidant and fuel inlets opening separately into the chamber at a distance suitable for establishing combustion (130, 240) which is highly diluted by internal recirculation (140, 220) of the combustion products towards the burner zone, and a device for stabilizing the dilute combustion
**characterized in that** it comprises a heating element (145, 215) designed to heat, during steady operating conditions, the combustion products in order to sustain self-ignition conditions, said heating element being positioned in the area (120) for diluting the fuel with combustion products in recirculation, firstly, and the oxidant with combustion products, secondly, and surrounding the set of oxidant and fuel jets (295) before their area of contact (235).

2. Combustion chamber according to claim 1, wherein the element (145, 215) extends at least beyond the area of contact (235) of the fuel and oxidant jets, along an axis of injection (250) of at least one of these jets.

3. Combustion chamber according to one of claims 1 or 2, wherein the heating element (145, 215) surrounds the ignition area (240).

4. Combustion chamber according to one of claims 1 to 3, wherein the heating element (145, 215) comprises an electrical resistor.

5. Combustion chamber according to one of claims 1 to 4, wherein the heating element (145, 215) comprises a heating tube supplied with heated products via an auxiliary combustion, combustion products or intermediate fluid.

6. Combustion chamber according to one of claims 1 to 5, wherein the heating element (145, 215) comprises a multi-perforated tube supplied with combustion products.

7. Combustion chamber according to one of claims 1 to 6, wherein the heating element (145, 215) is located at the base of the burner.

8. Combustion chamber according to one of claims 1 to 7, wherein the heating element (145, 215) is designed to maintain the temperature of the heated combustion products in recirculation below the temperature limit for the exponential rise in the rate of thermal nitrogen oxide production.

9. Combustion chamber according to one of claims 1 to 8, which comprises a means of preheating air (280) by recovering the radiative flow emitted by the heating element (215).

10. Combustion chamber according to claim 9, wherein the air preheating means (280) is a heat exchanger (150, 280) located inside the combustion chamber opposite the heating element (145, 215) and designed to recover a portion of the power supplied by the heating element transferred in the form of a radiative flow to the cold walls of the combustion chamber (245) and to transfer, to the oxidant and/or to the fuel, at least a portion of this recovered power.

11. Combustion chamber according to one of claims 9 or 10, wherein the air preheating means (280) is a heat exchanger (150, 280) located inside the combustion chamber opposite the heating element (145, 215) and designed to recover a portion of the power supplied by the heating element transferred in the form of a radiative flow to the cold walls of the combustion chamber (245) and to transfer, to a fluid load to be heated, at least a portion of this recovered power.

12. Combustion chamber according to one of claims 9 to 11, wherein the air preheating means is a radiative wall located inside the combustion chamber (245) between the heating element (145, 215) and the cold walls.

13. Combustion chamber according to one of claims 1 to 12, wherein the oxidant and fuel inlets have injection holes with suitable diameters such that the oxidant and fuel speeds are favorable for utilizing a highly dilute combustion.

14. Furnace, which comprises a combustion chamber according to one of claims 1 to 13.
